(19) Europäisches Patentamt
European Patent Office
Office européen des brevets

(11) EP 1 931 757 B1

(12) **EUROPEAN PATENT SPECIFICATION**

(45) Date of publication and mention of the grant of the patent:
**21.03.2012 Bulletin 2012/12**

(21) Application number: **06798111.8**

(22) Date of filing: **13.09.2006**

(51) Int Cl.:
***C11C 3/00*** *(2006.01)* ***C10L 1/02*** *(2006.01)*
***C11C 3/04*** *(2006.01)*

(86) International application number:
**PCT/JP2006/318550**

(87) International publication number:
**WO 2007/032538 (22.03.2007 Gazette 2007/12)**

(54) **METHOD OF PRODUCING A FATTY ACID ALKYL ESTER BIODIESEL FUEL**

VERFAHREN ZUR HERSTELLUNG EINES FETTSÄUREALKYLESTERS BIODIESELBRENNSTOFF

PROCÉDÉ DE PRODUCTION D UN ESTER D ALKYLE D'ACIDE GRAS BIODIESEL-COMBUSTIBLE

(84) Designated Contracting States:
**AT BE BG CH CY CZ DE DK EE ES FI FR GB GR HU IE IS IT LI LT LU LV MC NL PL PT RO SE SI SK TR**

(30) Priority: **16.09.2005 JP 2005269756**

(43) Date of publication of application:
**18.06.2008 Bulletin 2008/25**

(73) Proprietor: **Fujifilm Corporation**
**Minato-ku**
**Tokyo 106-8620 (JP)**

(72) Inventor: **FUKUNAGA, Hirofumi**
**Ashigarakami-gun, Kanagawa 258-8577 (JP)**

(74) Representative: **HOFFMANN EITLE**
**Patent- und Rechtsanwälte**
**Arabellastraße 4**
**81925 München (DE)**

(56) References cited:
**EP-A1- 0 967 197**
**EP-A1- 1 354 934**
**FR-A1- 2 698 101**
**GB-A- 573 202**
**JP-A- 6 313 188**
**JP-A- 2005 517 002**
**US-A1- 2002 010 359**

- **DATABASE WPI Week 200262 Thomson Scientific, London, GB; AN 2002-579429 XP002542782 & JP 2002 155024 A (YAMASA SHOYU KK) 28 May 2002 (2002-05-28)**
- **DE FILIPPIS P. ET AL.: 'Rapeseed Oil Transesterification Catalyzed by Sodium Phosphates' ENERGY & FUELS vol. 19, no. 6, 2005, pages 2225 - 2228, XP003010535**
- **VICENTE G. ET AL.: 'Integrated biodiesel production: a comparison of different homogeneous catalysts systems' BIORESOURCE TECHNOLOGY vol. 92, no. 3, 2004, pages 297 - 305, XP003010536**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 931 757 B1

## Description

TECHNICAL FIELD

The present invention relates to a method of producing a fatty acid alkyl ester by transesterification of a fatty acid glyceride; in particular, an oil(s) or/and fat(s) (including waste oil) derived from vegetable or animal fat, with a lower alcohol(s). Further, the present invention also relates to a fuel containing the fatty acid alkyl ester, singly or in combination with another hydrocarbon(s).

BACKGROUND ART

Use ofbiodiesel fuel (BDF) as an alternate fuel to light oil is attracting attention as a countermeasure to global warming and for diversification of fuel resources. BDFs are fuels containing fatty acid esters prepared by transesterification of oils and fats with lower alcohols, and the BDFs are effective in preventing global warming because their oils and fats are derived from vegetables and thus do not raise the concentration of carbon dioxide on the surface of the earth, a substance primarily responsible for global warming, even when burned as fuel materials.

Further, different from fuels purified from petroleum or the like, the fatty acid alkyl ester fuels characteristically emit almost no sulfur oxide during combustion, because the raw vegetable-derived oils and fats contain almost no sulfur; and, use of these fuels as automobile fuel alleviates adverse effects on the human body more effectively than use of light oil.

Hitherto, various methods of synthesizing fatty acid esters from raw oils and fats have been known. For example, a method of preparing fatty acid methyl esters and glycerol in reaction of oils and fats and methanol in the presence of a base, such as sodium hydroxide, and purifying the esters, for example, by water washing, neutralization, and others, is described in "Handbook of Organic Chemistry," Gihodo Shuppan, 1988, p.1407 to 1409. Many other methods of preparing, from oils and fats, alkyl esters usable as diesel fuel oil by using the same reaction have been studied, and, for example, JP-A-7-197047 ("JP-A" means unexamined published Japanese patent application), JP-A-7-310090, and JP-A-9-235573 describe methods of producing diesel fuel in reaction of waste edible oil and methanol in the presence of an alkali metal hydroxide.

Although these reactions of using an alkali metal hydroxide as a catalyst are effective as methods for transesterification of oils and fats, because the catalyst is quite inexpensive and the reaction proceeds in a short period of time, they still have various problems. For example, the method described in JP-A-7-197047, which demands a great amount of washing water, discharges a great amount of washing wastewater containing catalyst, oils and fats, fatty acid alkyl esters, glycerol, soap, and others, and thus the method has a large load on the environment. In addition, the fatty acid alkyl esters after washing retain water, and thus have disadvantages that they lead to high energy consumption and demand a complicated production process, because the water should be removed, for example, by drying under reduced pressure, before it is used as diesel fuel.

To overcome the above problems, a method of making the fatty acid alkyl ester more separable by neutralizing the reaction mixture by addition of an acid after transesterification reaction, was studied (see, for example, JP-A-2005-15562). However, the method also has a problem of unexpected deterioration in storage stability, because fatty acids generated by decomposition of soap during neutralization are more soluble in the fatty acid alkyl ester, leading to gelation of the fatty acid alkyl ester phase.

For that reason, some disclosed methods use, as a catalyst, a base other than alkali metal hydroxide, thereby demanding no water washing and thus no wastewater treatment of the washing water. Examples thereof include a method of using sodium carbonate or sodium bicarbonate (JP-A-61-254255); a method of allowing oils and fats and alcohols to react in the presence of ZnO or a Zn and Al composite oxide catalyst, in the temperature range of 170 to 250°C, at 10 MPa or less (U.S. Patent No. 5,908,946); and methods of using a solid catalyst containing calcium oxide (JP-A-2001-271090 and JP-A-2004-35873), calcium oxide, and ultrasonic wave irradiation ("Bioresource Technology," 1999, Vol. 70, p.249-253), or a compound selected from oxides, hydroxides, and carbonate salts of magnesium (JP-A-2002-308825). None of these methods, however, have been effective in commercial scale application, because the catalysts are less reactive, high temperature or/and high pressure is needed, or the amount(s) of the catalyst or/and methanol used is large.

Further, JP-A-2002-167356 describes a method of using an amine and water as catalysts, but the method is also low in energy efficiency, from the viewpoints of methanol consumption, reaction temperature, reaction period of time, and distillation operation. JP-A-2005-29715 discloses a method of using an amine as the base and $CO_2$ in separation of products after reaction, but the method also has many problems in commercial scale operation, because of its large consumption of methanol and the base.

Further, methods were also developed to advance transesterification without use of any catalyst (see, for example, JP-A-2000-109883, JP-A-2000-143586, and JP-A-2005-60591). However, the conditions described in these

references are almost not practical, because decomposition of the oils and fats proceeds only partially and the reaction conditions are severe, i.e. high in temperature and pressure.

Still further, the biodiesel fuels obtained by the methods described in the above related arts are mentioned to be used only singly, but the oil-or/and-fat-derived fatty acid esters, which contain ester groups and unsaturated bonds, have the problem of low stability during storage or use, which is caused by their high hygroscopicity, low oxidation resistance, and high pour point when used singly

FR 2698101 describes a process of transesterification of triglycerides of vegetable or animal origin by using a catalyst. Such an ester is suitable for the production of alcohols, fatty amines and various products of the oil chemistry as well as fuels.

DISCLOSURE OF INVENTION

The present invention contemplates providing a method of producing a biodiesel containing a fatty acid alkyl ester with a high purity, which is sufficiently high in reaction rate, which allows reduction of load on the environment by washing wastewater, which is simple in manufacturing process and low in production cost.

According to the present invention, there is provided a method as defined in claim 1 and preferred embodiments are described in the dependent claims.

Other and further features and advantages of the invention will appear more fully from the following description.

BEST MODE FOR CARRYING OUT INVENTION

After intensive studying, the inventor of the present invention found that it was possible to produce a high-purity fatty acid alkyl ester, sufficiently high in reaction rate, allowing easy taking out of the fatty acid alkyl ester after reaction; allowing reduction of load on the environment by washing wastewater; simple in the manufacturing process and low in production cost, and giving a product that is used as bio diesel fuel, by carrying out transesterification reaction of an oil or/and fat and an alcohol(s), in the presence of a potassium phosphate catalyst. The present invention was attained based on the above finding.

Hereinafter, the present invention will be described in detail.

The present invention resides in a method of producing a fatty acid alkyl ester by transesterification of an oil or/and fat (including a waste oil) derived from a vegetable or animal fat with a lower alcohol. Herein, as the "oil or/and fat" to be used in the present invention, use may be made of an oil or/and a fat, or a mixture of oils or/and fats, i.e. at least one selected from the group consisting of oils and fats.

As in conventional methods, when an transesterification reaction of oils and fats, i.e., fatty acid triglycerides, is performed, for example, with an alkali metal hydroxide and methanol, the ester moiety in the fatty acid glyceride may be possibly attacked nucleophilically either with hydroxide ion, water, or methoxide anion, in the reaction system.

For example, nucleophilic attack by a methoxide anion, as shown in the following formula, gives a fatty acid alkyl ester product, and the transesterification reaction is a reaction favorable in the this reaction system. In the formula, $R_1$ represents an alkyl group in the long-chain fatty acid constituting the oils and fats, and $R_2$ represents a group constituting glycerol, and M represents an alkali metal.

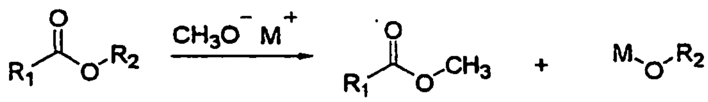


However, as shown in the following formula, nucleophilic attack by hydroxide ion or water gives a fatty acid, and the resultant fatty acid once generated gives an fatty acid alkali-metal salt, i.e., a soap, in reaction with the base catalyst, alkali metal hydroxide (in the formula, $R_1$ represents an alkyl group in the long-chain fatty acid constituting the oils and fats, and $R_2$ represents a group constituting glycerol, and M represents an alkali metal.). The fatty acid alkali metal salt once formed does not go back to the ester under such basic conditions, because of the acidity of the substances present in the reaction system.

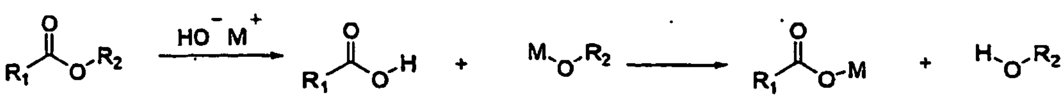

Based on the reaction formulae above and considering the amounts of the fatty acid glyceride, alcohol, and alkali metal hydroxide present in the transesterification reaction system, the equilibrium present between the anionic species of alcohol and alkali metal hydroxide is shown in the following formula. In the formula, $R_1$ represents an alkyl group in the long-chain fatty acid constituting the oils and fats, and $R_2$ represents a group constituting glycerol, and M represents an alkali metal. As is apparent from the formula, the alkoxide anion generated in equilibrium attacks the fatty acid glyceride, to give the fatty acid ester.

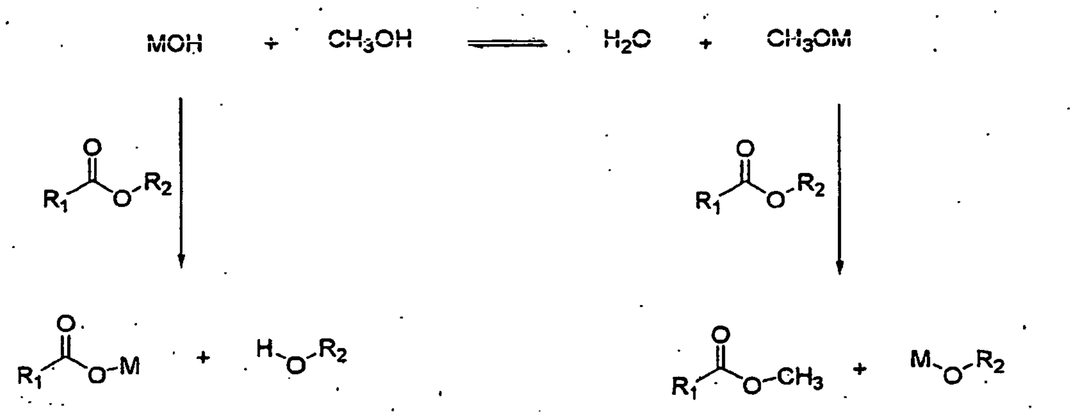

In conventional production methods by using an alkali metal hydroxide, use of a catalyst in an amount of approximately 1% to oils and fats is recommended, which means that the hydroxide ion is added in an amount of at least 1% in.the transesterification reaction system. Thus, it is essentially possible that a fatty acid, or a fatty acid alkali-metal salt, be formed at a mole number identical with that of the catalyst added.

For that reason, it would be possible to avoid generation of hydroxide ions by using anhydrous sodium methylate or ethylate as the base catalyst, but use of sodium methylate or ethylate is rather difficult ' to use in commercial scale, because they are more hygroscopic and disadvantageous from the point of cost. Further, the raw oils and fats to be used are not always available in anhydrous state, and thus, use of an anhydrous alkoxide does not solve the problems above, because the amount of the hydrolyzed fatty acids or soaps generated increases according to the water content in the raw oils and fats.

Contrary to the above, in the present invention, use of a phosphoric acid potassium salt, which results in the equilibrium shown in the following formula, is effective in producing a fatty acid alkyl ester while eliminating generation of a fatty acid or fatty acid alkali-metal salt by hydrolysis (in the formula, $R_1$ represents an alkyl group in the long-chain fatty acid constituting the oils and fats, and $R_2$ represents a group constituting glycerol, and M represents an alkali metal.).

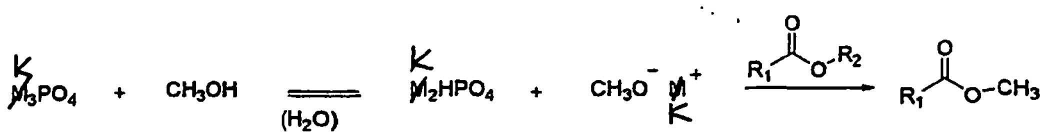


Further, in the method of the present invention, which uses as a catalyst a potassium salt of phosphoric acid, it is possible to separate the fatty acid alkyl ester phase from the catalyst/glycerol phase easily after the reaction, to take out a highly-pure fatty acid alkyl ester usable as fuel, only via simple gravity separation. As a result, it is possible to avoid discharging a large amount of washing wastewater from the production process, to reduce load on the environment, as well as to eliminate the need for an additional process, for example, of purifying the fatty acid alkyl ester, thereby allowing cost reduction.

As described above, the present invention is characterized by using a phosphoric acid potassium salt as a catalyst. Characteristically, phosphoric acid potassium salts have a suitable basicity and an extremely low nucleophilicity, and they do not produce any alkaline soap even when raw oils and fats contain some water as impurity, because the anhydrides thereof adsorb water, to incorporate it as water of crystallization.

The examples of the phosphoric acid potassium salts for use in the present invention include potassium phosphate, and potassium hydrogen phosphate; preferable ones is potassium phosphate; and most preferable one is potassium phosphate. Potassium phosphate may be the anhydrous one represented by $K_3PO_4$, or a one having water of crystallization, for example, represented by $K_3PO_4$-$3H_2O$.

The amount of the phosphoric acid potassium salt to be used may vary depending on the saponification and acid values of the raw oils and fats, but is preferable 0.1 to 10 parts by mass, more preferably 0.5 to 5 parts by mass, and most preferably 1 to 3 parts by mass, to 100 parts by mass of the raw oils and fats. It is also preferable to determine the acid value of the raw oils and fats previously by titration, and add the phosphoric acid potassium salt in an amount needed for neutralization to that in the above-mentioned preferable amount.

The oils and fats for use in the present invention are not particularly limited, and preferable examples thereof include palm oil, palm kernel oil, soy bean oil, canola oil, coconut oil and fat, com oil, olive oil, sunflower oil, rapeseed oil, cuphea oil, flaxseed oil, cottonseed oil, tung oil, and castor oil; and more preferable examples thereof include palm oil, palm kernel oil, soy bean oil, canola oil, coconut oil and fat, corn oil, sunflower oil, and rapeseed oil. In addition to these vegetable oils and fats, common oils and fats including beef tallow and others, and waste oils discharged from food factories, restaurants, and commonalty homes may also be used in the present invention. The above oils and fats may be used singly or as a mixture; and other processed oils and fats containing any of these oils and fats as principal components may also be used in the present invention.

The acid value of the raw oil/fat is preferably 5 or less, more preferably 3 or less, and most preferably 2 or less. Oils/fats having a too high acid value are not preferable because they make it difficult to separate the products after reaction, although the transesterification reaction may be performed by addition of the phosphoric acid alkali metal salt in an increased amount. From the viewpoint above, it is preferable to determine the acid value of the oils and fats previously, when an improperly purified oil/fat or a waste edible oil is used as a raw material.

Among oils and fats to be used as the raw materials, those high in an iodine value or/and low in oxidation stability may be used after subjected to partial hydrogenation. Further, a fatty acid alkyl ester high in the degree of saturation have a high pour point and a high cloud point, and thus may be apt to be difficult to handle at low temperature, but can be used without any problems when used as a mixed fuel as will be described below.

The alcohol(s) for use in the present invention is a straight-chain or branched alcohol having 1 to 4 carbon atoms, and examples thereof include methanol, ethanol, 1-propanol, 2-propanol, 1-butanol, 2-butanol, 2-methyl-1-propanol, and 2-methyl-2-propanol, which may be used singly or in combination of two or more of these.

From the viewpoint of usability of the fatty acid alkyl ester to be obtained, use may be preferably made, as a fuel oil additive, of methanol, ethanol, or 2-methyl-1-propanol; more preferably methanol or 2-methyl-1-propanol; and most preferably methanol. The water content of the alcohol is preferably low, specifically the water content in alcohol is preferably 1% or less.

The amount of the alcohol(s) to be added to the raw oil(s)/fat(s) may vary depending on the average molecular weight of the oil(s)/fat(s) to be used, but the theoretical amount of the alcohol(s) is generally 3 moles, per mole of the oil(s)/fat(s), because the oil(s)/fat(s) is a glycerol ester(s). Accordingly, for example, the equivalence of the alcohol(s) to be added, to 100 parts by mass of the oil(s)/fat(s), can be expressed as a multiple of the chemical equivalence calculated according to the following formula (A).

$$Wt = (100/Mo) \times 3 \times Ma \qquad (A)$$

Wt: Equivalent amount to be added of alcohol(s) (part by mass)
Mo: Average molecular weight of oil(s)/fat(s)
Ma: (Average) molecular weight of alcohol(s)

The alcohol(s) is used in an amount of preferably 1.0 to 30 times, more preferably 1.0 to 5 times, and still more preferably 1.0 to 2.0 times, larger than the equivalent amount to be added Wt, as calculated according to formula (A). In the present invention, alkoxide(s), active species, is generated smoothly in reaction in the presence of a phosphoric acid potassium salt, and thus the transesterification reaction progresses sufficiently by use of the alcohol(s) in an amount close to the stoichiometric amount.

The transesterification reaction is essentially an equilibrium reaction, and thus it is generally necessary to use the alcohol(s) in an amount large excess to the raw materials, to increase the amount of the reaction product thereby to obtain a desired product. However, use of the alcohol(s) in an amount more than necessary is not preferable from the economical .viewpoints, because it is waste of raw materials and it demands an additional cost for removing the alcohol(s) from the product. On the contrary, in the method of the present invention, the glycerol formed in association with the progress of the reaction causes phase separation from the fatty acid alkyl ester(s) generated, and thus, it is possible to allow the reaction to proceed even when the amount of alcohol(s) used is in a small excess amount, as described above.

The average molecular weights in formula (A) are calculated based on the composition of components of the raw oil(s)/fat(s) and the alcohol(s) to be used, respectively.

For example, if the equivalent amount to be added of alcohol(s), in the case where the oil(s)/fat(s) to be used have an average molecular weight of 887 and the alcohol is methanol (molecular weight 32), is calculated according to

formula (A), methanol is to be used in an amount of preferably 10.8 to 324 parts by mass, more preferably 10.8 to 54.0 parts by mass, and still more preferably 10.8 to 21.6 parts by mass, to 100 parts by mass of the oil(s)/fat(s).

The reaction temperature of the transesterification reaction is preferably 20°C to 100°C, more preferably 30°C to 70°C, and most preferably 50°C to 60°C. The reaction time period may vary depending on the reaction temperature and the kind of the raw materials to be used, but is selected preferably in the range of 1 minute to 2 hours, more preferably 10 minutes to 1 hour. The phosphoric acid potassium salt for use in the present invention is high in catalytic activity, and thus, unneeded elongation of the reaction period of time is not preferable, because it may result in generation of unexpected byproducts and from the points of production cost The reaction mixture is preferably agitated during reaction, for acceleration of the reaction.

The fatty acid alkyl ester, e.g. fatty acid methyl ester, and glycerol generated in the reaction step can be sufficiently separated through gravity separation when allowed to stand for only I hour or shorter under atmospheric pressure, since the fatty acid alkyl ester, e.g. fatty acid methyl ester, and glycerol are different in specific density from each other and less compatible with each other. During that separation operation, the phosphoric acid potassium salt used in the present invention is trapped in the glycerol phase. Further, most of the alcohol and water remaining in the reaction mixture also migrate into the glycerol phase, because they have a polarity significantly different from that of the fatty acid alkyl ester. As a result, in the light fatty acid alkyl ester phase, the concentrations of the unreacted alcohol, water, and glycerol result to be extremely low. When subjecting to the gravity separation, the reaction mixture may be centrifuged as needed, to shorten the period of time for the separation step.

The fatty acid alkyl ester separated through gravity separation may be used as a fuel or a fuel oil additive as it is without any additional special purification, or may be purified by distillation depending on the case. Further, the resultant ester may be purified by filtration through a column packed with activated carbon, activated clay. The thus-obtained fatty acid alkyl ester can satisfy the standards on water content, residual alcohol, and free glycerol, as specified, for example, in German standard (DIN E 51606) and U.S. standard (ASTM D6751), and thus is used as it is as diesel fuel.

An antioxidant such as t-butylhydroquinone may be added to the fatty acid alkyl ester obtained, for stabilization during storage.

Further, in the method of the present invention, the phosphoric acid potassium salt used in the transesterification reaction can be used repeatedly in the next transesterification reaction. That is, the heavy glycerol phase after separated by gravity separation from and taken off the fatty acid alkyl ester, which is formed in the transesterification reaction according to the present invention, still contains the unreacted alcohol and the phosphoric acid potassium salt. It is possible to conduct the reaction successively, by reusing the phosphoric acid potassium salt by adding additional raw oil(s)/fat(s) and alcohol(s) to the aforementioned heavy liquid phase.

In reusing the phosphoric acid potassium salt, if is important to take into consideration the acid value of the raw oil(s)/fat(s), and it is necessary that there is a sufficient amount of the base of the phosphoric acid potassium salt remaining in the system so that the base would not be completely neutralized with a fatty acid(s) contained in the raw oil(s)/fat(s). The phosphoric acid potassium salt may be reused successively, until the base is completely neutralized with the fatty acid(s) contained in the raw oil(s)/fat(s).

For example, when potassium phosphate and methanol are to be used in the reaction, the heavy solution after the reaction (or the repeated reactions) contains glycerol, potassium phosphate, fatty acid potassium salt, potassium hydrogen phosphate, phosphoric acid, and methanol. It is possible to separate and take off glycerol and methanol from the heavy solution by distillation, and use these in industrial applications. Further, the residue, which contains salts, such as potassium phosphate and fatty acid potassium salts, may be used favorably as a fertilizer. The residue may be used as a fertilizer as it is, or as a chemical fertilizer after it is blended with a nitrogen source such as nitrate or ammonium salt.

Hereinafter, the fuel containing the fatty acid alkyl ester will be described.

The fatty acid alkyl ester obtained as described herein may be used singly as it is (mass ratio: 100%) as a diesel fuel, or it may be used as a fuel after mixing with an organic compound that is liquid under normal temperature and normal pressure (20°C, 101.325 kPa).

The organic compound for use in mixing that is liquid under normal temperature normal pressure may not be a single component compound, but is rather preferably a commonly available hydrocarbon mixture containing hydrocarbons mainly having 8 to 26 carbon atoms. Examples of the hydrocarbon mixture for use in mixing include kerosene, or light oil. In the present invention, the "kerosene" means a petroleum product obtained by distillation of crude oil under normal pressure having a boiling point of 150 to 280°C, as defined in the Dictionary of Science and Chemistry, 5th Ed., (Iwanami Shoten), and any one of commercially available kerosenes may be used. The kerosene that can be used in the present invention is preferably a kerosene which meets the stipulation of JIS K 2203 No. 1 or 2. Further, in the present invention, the "light oil" means a petroleum product obtained by distillation of crude oil under normal pressure having a boiling point of 200 to 350°C, as defined in the Dictionary of Science and Chemistry, 5th Ed., (Iwanami Shoten), and any one of commercially available light oils may be used. The light oil that can be used in the present invention is preferably a light oil which meets the stipulation of JIS K 2204 No. Special 1, 1, 2, 3, or Special 3.

The mixing rate of the fatty acid alkyl ester is preferably 1% or more, more preferably 1% or more and 99% or

less, further preferably 1% or more and 30% or less or 70% or more and 99% or less, and most preferably 1% or more and 25% or less, in terms of mass ratio.

Because the specific density of fatty acid alkyl ester is generally larger than that of light oil or kerosene, it is preferable to use a mixing method of splash-blending the prepared fatty acid alkyl ester, for example, on a light oil meeting the stipulation in JIS K2204 Neo. 1. Alternatively, any known method such as in-tank or in-line blending may be used for mixing (see, for example, JP-T-2002-530515 ("JP-T" means published searched patent publication), and JP-T-2004-520453).

For example, a fuel obtained by mixing 1 part by mass of the fatty acid methyl ester prepared according to the method of the present invention to 99 parts by mass of light oil can be used as a diesel fuel, which meets the standard of light oil as specified in JYS K 2204.

Also preferable is a fuel containing the fatty acid alkyl ester in a mass ratio range of 1% or more and 30% or less, which fuel is obtained by: mixing the fatty acid alkyl ester prepared by the method of the present invention with kerosene at a mass ratio of 20% or more and 80% or less, and mixing the resultant mixture further with light oil. Mixing may be performed by the aforementioned splash, in-tank, or in-line blending, or any other known method. It is possible to lower the cloud point, pour point, and viscosity, by previously mixing the fatty acid alkyl ester with kerosene, and further it is also possible to mix the kerosene mixture with light oil any time as needed, thereby improving working efficiency and storage stability of the fuel.

The fuel thus obtained by mixing can satisfy the U.S. standards ASTM D6751 or A-A59693A, and may be used as a diesel fuel, for example, for automobiles.

According to the production method of the present invention, it is possible to efficiently produce a highly-pure fatty acid alkyl ester, sufficiently high in reaction rate, allowing easy taking off of the fatty acid alkyl ester after reaction; allowing reduction of load on the environment by washing wastewater; simple in the manufacturing process and low in production cost. The fatty acid alkyl ester produced by the method of the present invention is used as biodiesel fuel.

The present invention will be described in more detail based on the following examples, but the invention is not intended to be limited thereto.

## EXAMPLES

### Example 1

In a 50-mL round-bottomed flask, 20 mL of a commercially available canola oil (trade name: Nisshin Canola Oil (estimated average molecular weight 880, d=0.9), manufactured by Nisshin Oillio), 3.6 mL of methanol, and 0.21 g of potassium phosphate were placed, and the resultant mixture was allowed to react while agitated at 50°C for 30 minutes. After the completion of reaction, the mixture was allowed to cool to normal temperature, and one-hour after, the upper layer methyl ester phase separated was collected by aspiration, to give a fatty acid methyl ester.. The conversion rate from the raw oil/fat was 99%, and the mass of the fatty acid methyl ester formed was 18 g. The fatty acid methyl ester can satisfy the U.S. standard (ASTM D6751).

### Example 2

To the heavy solution in Example 1 from which the fatty acid methyl ester was taken off, 20 mL of a commercially available canola oil (trade name: Nisshin Canola Oil (estimated average molecular weight 880, d=0.9), manufactured by Nisshin Oillio), and 3.6 mL of methanol were added, and the resultant mixture was allowed to react while agitated at 50°C for 30 minutes. After the completion of reaction, the mixture was allowed to cool to normal temperature, and one-hour after; the upper layer methyl ester phase separated was collected by aspiration, to give a fatty acid methyl ester. The conversion rate from the raw oil/fat was 99%, and the mass of the fatty acid methyl ester formed was 17.5 g. The fatty acid methyl ester can satisfy the U.S. standard (ASTM D6751).

### Example 3

To the heavy solution in Example 2 from which the fatty acid methyl ester was taken off, 20 mL of a commercially available canola oil (trade name: Nisshin Canola Oil (estimated average molecular weight 880, d=0.9), manufactured by Nisshin Oillio), and 3.6 mL of methanol were added, and the resultant mixture was allowed to react while agitated at 50°C for 30 minutes. After the completion of reaction, the mixture was allowed to cool to normal temperature, and one-hour after, the upper layer methyl ester phase separated was collected by aspiration, to give a fatty acid methyl ester. The conversion rate from the raw oil/fat was 95%, and the mass of the fatty acid methyl ester formed was 17 g.

Example 4

In a 300-mL three-necked flask, 18 mL of methanol and 1.0 g of potassium phosphate were placed, and thereto was added 98.3 g of a commercially available palm oil (manufactured by Fluka, iodine value 50-57, acid value<0.4) previously heated to 50°C; and the resultant mixture was allowed to react at 50°C for 30 minutes. After the completion of reaction, the mixture was allowed to cool to 30°C, and the upper layer methyl ester phase separated was collected by aspiration, to give a fatty acid methyl ester. The conversion rate from the raw oil/fat was 99%, and the mass of the fatty acid methyl ester formed was 94.2 g. The thus-formed fatty acid methyl ester solidified completely when cooled to 10°C.

Example 5

To 190 g of light oil (product name: ENEOS Light Oil, manufactured by Nippon Oil Corporation) provided in a grounded metal bucket, was introduced 10 g of the fatty acid methyl ester obtained in Example 1 under agitating, followed by agitating for 10 minutes, to give a fuel. The thus-obtained liquid immediately after agitation was mixed homogeneously, and two-hour after it remained in the homogeneous state. The fuel thus obtained satisfies the standards on flash point, 90% distillation temperature, pour point, cetane number, kinetic viscosity, sulfur content, and density, as stipulated in JIS K 2204, and can be used as a diesel fuel, for example, for automobiles.

Example 6

To 98 g of light oil (product name: ENEOS Light Oil, manufactured by Nippon Oil Corporation) provided in a grounded metal bucket, was added 2 g of the fatty acid methyl ester obtained in Example 4 previously heated to 40°C, followed by agitating for 10 minutes, to give a fuel. The thus-obtained liquid immediately after agitation was mixed homogeneously, and six-hour after it remained in the homogeneous state. The fuel thus obtained satisfies the standards on flash point, 90% distillation temperature, pour point, cetane number, kinetic viscosity, sulfur content, and density, as stipulated in JIS K 2204, and can be used as a diesel fuel, for example, for automobiles.

Example 7

To 10 g of kerosene (product name: ENEOS Kerosene, manufactured by Nippon Oil Corporation) provided in a grounded metal bucket, was added 10 g of the fatty acid methyl ester obtained in Example 4 previously melted at 40°C, followed by agitating for 30 minutes. The thus-obtained liquid immediately after agitation was mixed homogeneously, and twelve-hour after it remained in the homogeneous state. The pour point of the fatty acid methyl ester was 10°C before mixing, but the pour point of the mixed fuel after mixing with kerosene was lower than 0°C.
The thus-obtained mixed liquid was added carefully to 80 g of light oil (product name: ENEOS Light Oil, manufactured by Nippon Oil Corporation) provided in another grounded metal bucket under agitating, followed by agitating for 10 minutes as it was, to give a fuel. The fuel thus obtained had an iodine value of 5 or less, and an oxidation stability quite high. Further, the fuel remained fluidity without any change in appearance even when stored at 5°C, and can be used as a diesel fuel.

Comparative Example 1

In a 50-mL round-bottomed flask, 0.20 g of sodium hydroxide and 3.6 mL of methanol were placed, followed by agitating for 30 minutes until the resultant mixture would form a complete solution. Thereto, was added 20 mL of a commercially available canola oil [trade name: Nisshin Canola Oil (estimated average molecular weight 880, d=0.9), manufactured by Nisshin Oillio], followed by agitating at 60°C for 30 minutes. After the completion of reaction, the reaction mixture was allowed to cool to normal temperature. The reaction mixture contained white suspended substances after the completion of reaction time, and seemed to be turbid and heterogeneous in the entire mixture. One-hour after, the mixture remained turbid and heterogeneous. The reaction mixture was transferred into a 50-mL centrifuge tube, and centrifuged at 700 g for 30 minutes, and the fatty acid methyl ester phase separated was collected. The conversion rate from the raw oil/fat was 99%, and the yield of the light phase obtained was 16 g.
As described above, the reaction using an alkali metal hydroxide as a catalyst is quite high in reactivity, but it demands complicated separation operation after the reaction, to lead to increase in cost.

INDUSTRIAL APPLICABILITY

The production method of the present invention is preferable to efficiently produce a highly-pure fatty acid alkyl

ester, sufficiently high in reaction rate, allowing easy taking off of the fatty acid alkyl ester after reaction; allowing reduction of load on the environment by washing wastewater; simple in the manufacturing process and low in production cost. The fatty acid alkyl ester produced by the method of the present invention can be used as diesel fuel, e.g. biodiesel fuel.

## Claims

1. A method of producing a biodiesel fuel containing a fatty acid alkyl ester, **characterized in that** the method comprising the steps of:

   providing an oil or/and fat, an alcohol having 1 to 4 carbon atoms, and a potassium phosphate catalyst into a reaction system;
   bringing the oil or/and fat and the alcohol into a transesterification reaction in the presence of the potassium phosphate catalyst; and
   obtaining the fatty acid alkyl ester via the transesterification reaction and providing a high quality biodiesel fuel containing this fatty acid alkyl ester.

2. The method according to Claim 1, wherein the transesterification reaction is conducted at the temperature of 30°C to 70°C.

3. The method according to Claim 1 or 2, wherein the alcohol is added in an amount of 1.0 to 2.0 times larger than the equivalent amount Wt according to formula (A), to 100 parts by mass of the oil or/and fat:

$$Wt = (100/Mo) \times 3 \times Ma \qquad (A)$$

   Wt: Equivalent amount to be added of alcohol (part by mass)
   Mo: Average molecular weight of oil/fat
   Ma: A molecular weight of alcohol.

4. The method according to Claim 1 or 2, wherein the alcohol is methanol which is added in an amount of 10.8 to 21.6 parts by mass, to 100 parts by mass of the oil/fat.

5. The method according to any one of Claims 1 to 4, further comprising the steps of:

   separating the fatty acid alkyl ester obtained by the transesterification reaction, to remove from the reaction system;
   adding an oil or/and fat and an alcohol having 1 to 4 carbon atoms to the remaining phase; and
   obtaining a fatty acid alkyl ester.

6. The method according to any one of the claims 1 to 5 further comprising the step of repeating the steps claimed in claim 5, to obtain the fatty acid alkyl ester continuously.

7. The method according to any one of Claims 1 to 6, comprising using the potassium phosphate catalyst repeatedly in the transesterification reaction.

8. The method according to any one of Claims 1 to 7, further comprising the step of adjusting the fatty acid alkyl ester produced by the method according to any one of Claims 1 to 6 to be contained in the biodiesel fuel at a mass ratio of 1% or more and 100% or less.

9. The method according to any one of Claims 1 to 8, further comprising the step of mixing the fatty acid alkyl ester produced by the method according to any one of Claims 1 to 6 with light oil at a mass ratio of 1% or more and 99% or less.

10. The method according to any one of Claims 1 to 9, further comprising the step of adjusting the fatty acid alkyl ester produced by the method according to any one of Claims 1 to 6 to be contained in a mass ratio of 1% or more and 30% or less, by mixing the fatty acid alkyl ester with kerosene at a mass ratio of 20% or more and 80% or less, and

further mixing the resultant mixture with light oil.

## Patentansprüche

1. Verfahren zur Erzeugung eines Biodieselkraftstoffes, umfassend einen Fettsäurealkylester, **dadurch gekennzeichnet, dass** das Verfahren folgende Schritte umfasst:

   Vorsehen eines Öls und/oder Fetts, eines Alkohols mit 1 bis 4 Kohlenstoffatomen und eines Kaliumphosphat-Katalysators in einem Reaktionssystem;
   Durchführen einer Umesterungsreaktion mit dem Öl und/oder Fett und dem Alkohol in der Gegenwart des Kaliumphosphat-Katalysators; und
   Erhalt des Fettsäurealkylesters über die Umesterungsreaktion und Erhalt eines Biodieselkraftstoffes mit hoher Qualität, umfassend diesen Fettsäurealkylester.

2. Verfahren nach Anspruch 1, worin die Umesterungsreaktion bei einer Temperatur von 30-70°C durchgeführt wird.

3. Verfahren nach Anspruch 1 oder 2, worin der Alkohol in einer Menge, die 1,0- bis 2,0-fach größer ist als die Äquivalentmenge Wt entsprechend der Formel (A), zu 100 Massenteilen des Öls und/oder Fetts:

$$Wt = (100/Mo) \times 3 \times Ma \qquad (A)$$

   Wt: zuzugebende Äquivalentmenge des Alkohols (Massenteile)
   Mo: durchschnittliches Molekulargewicht von Öl/Fett
   Ma: Molekulargewicht von Alkohol

4. Verfahren nach Anspruch 1 oder 2, worin der Alkohol Methanol ist, der in einer Menge von 10,8 bis 21,6 Massenteile zu 100 Massenteile des Öls/Fetts gegeben wird.

5. Verfahren nach einem der Ansprüche 1 bis 4, weiterhin umfassend die Schritte:

   Trennen des Fettsäurealkylesters, erhalten durch die Umesterungsreaktion, zur Entfernung aus dem Reaktionssystem;
   Zugabe eines Öls und/oder Fetts und eines Alkohols mit 1 bis 4 Kohlenstoffatomen zu der verbleibenden Phase; und
   Erhalt eines Fettsäurealkylesters.

6. Verfahren nach einem der Ansprüche 1 bis 5, weiterhin umfassend den Schritt der Wiederholung der Schritte gemäß Anspruch 5, unter kontinuierlichem Erhalt des Fettsäurealkylesters.

7. Verfahren nach einem der Ansprüche 1 bis 6, umfassend die wiederholte Verwendung des Kaliumphosphat-Katalysators bei der Umesterungsreaktion.

8. Verfahren nach einem der Ansprüche 1 bis 7, weiterhin umfassend den Schritt der Einstellung des Fettsäurealkylesters, erzeugt durch das Verfahren gemäß einem der Ansprüche 1 bis 6, der in dem Biodieselkraftstoff enthalten ist, auf ein Massenverhältnis von 1% oder mehr und 100% oder weniger.

9. Verfahren nach einem der Ansprüche 1 bis 8, weiterhin umfassend den Schritt des Mischens des Fettsäurealkylesters, erzeugt durch das Verfahren gemäß einem der Ansprüche 1 bis 6, mit Leichtöl bei einem Massenverhältnis von 1% oder mehr und 99% oder weniger.

10. Verfahren nach einem der Ansprüche 1 bis 9, weiterhin umfassend den Schritt der Einstellung des Fettsäurealkylesters, erzeugt durch das Verfahren gemäß einem der Ansprüche 1 bis 6, auf ein Massenverhältnis von 1% oder mehr und 30% oder weniger, durch Mischen des Fettsäurealkylesters mit Kerosin bei einem Massenverhältnis von 20% oder mehr und 80% oder weniger und weiteres Mischen der resultierenden Mischung mit Leichtöl.

## Revendications

1. Procédé de production d'un biodiesel contenant un ester alkylique d'acide gras, **caractérisé en ce que** le procédé comprend les étapes consistant à :

   utiliser une huile et/ou une matière grasse, un alcool comprenant de 1 à 4 atomes de carbone, et un catalyseur de phosphate de potassium dans un système réactionnel ;
   faire réagir l'huile et/ou la matière grasse et d'alcool dans une réaction de transestérification en présence du catalyseur de phosphate de potassium ; et
   obtenir l'ester alkylique d'acide gras par la réaction de transestérification et fournir un biodiesel de qualité élevée contenant cet ester alkylique d'acide gras.

2. Procédé selon la revendication 1, dans lequel la réaction de transestérification est réalisée à la température de 30 °C à 70 °C.

3. Procédé selon la revendication 1 ou 2, dans lequel l'alcool est ajouté en une quantité de 1,0 à 2,0 fois supérieure à la quantité équivalente Wt selon la formule (A), pour 100 parties en poids de l'huile et/ou de la matière grasse :

$$Wt = (100/Mo) \times 3 \times Ma \qquad (A)$$

   Wt : quantité équivalente à ajouter de l'alcool (parties en poids)
   Mo : poids moléculaire moyen de l'huile/matière grasse Ma : poids moléculaire de l'alcool.

4. Procédé selon la revendication 1 ou 2, dans lequel l'alcool est le méthanol qui est ajouté en une quantité de 10,8 à 21,6 parties en poids, pour 100 parties en poids de l'huile/matière grasse.

5. Procédé selon l'une quelconque des revendications 1 à 4, comprenant en outre les étapes consistant à :

   séparer l'ester alkylique d'acide gras obtenu par la réaction de transestérification, pour le retirer du système réactionnel ;
   ajouter une huile et/ou une matière grasse et un alcool comprenant de 1 à 4 atomes de carbone à la phase restante ; et
   obtenir un ester alkylique d'acide gras.

6. Procédé selon l'une quelconque des revendications 1 à 5, comprenant en outre l'étape consistant à répéter les étapes revendiquées dans la revendication 5, pour obtenir l'ester alkylique d'acide gras de manière continue.

7. Procédé selon l'une quelconque des revendications 1 à 6, comprenant l'utilisation du catalyseur de phosphate de potassium de manière répétée dans la réaction de transestérification.

8. Procédé selon l'une quelconque des revendications 1 à 7, comprenant en outre l'étape consistant à ajuster l'ester alkylique d'acide gras produit par le procédé selon l'une quelconque des revendications 1 à 6 pour qu'il soit contenu dans le biodiesel selon un rapport en poids supérieur ou égal à 1 % et inférieur ou égal à 100 %.

9. Procédé selon l'une quelconque des revendications 1 à 8, comprenant en outre l'étape consistant à mélanger l'ester alkylique d'acide gras produit par le procédé selon l'une quelconque des revendications 1 à 6 avec une huile légère selon un rapport en poids supérieur ou égal à 1 % et inférieur ou égal à 99 %.

10. Procédé selon l'une quelconque des revendications 1 à 9, comprenant en outre l'étape consistant à ajuster l'ester alkylique d'acide gras produit par le procédé selon l'une quelconque des revendications 1 à 6 pour qu'il soit contenu selon un rapport en poids supérieur ou égal à 1 % et inférieur ou égal à 30 %, en mélangeant l'ester alkylique d'acide gras avec du kérosène selon un rapport en poids supérieur ou égal à 20 % et inférieur ou égal à 80 %, et en mélangeant en outre le mélange résultant avec une huile légère.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 7197047 A
- JP 7310090 A
- JP 9235573 A
- JP 2005015562 A
- JP 61254255 A
- US 5908946 A
- JP 2001271090 A
- JP 2004035873 A
- JP 2002308825 A
- JP 2002167356 A
- JP 2005029715 A
- JP 2000109883 A
- JP 2000143586 A
- JP 2005060591 A
- FR 2698101
- JP 2002530515 T
- JP 2004520453 T


### Non-patent literature cited in the description


- Handbook of Organic Chemistry. Gihodo Shuppan, 1988, 1407-1409
- *Bioresource Technology,* 1999, vol. 70, 249-253
- Dictionary of Science and Chemistry. Iwanami Shoten